(19) Europäisches Patentamt
European Patent Office
Office européen des brevets

(11) Veröffentlichungsnummer: **0 358 741 B1**

(12) # EUROPÄISCHE PATENTSCHRIFT

(45) Veröffentlichungstag der Patentschrift: **10.02.93**

(51) Int. Cl.$^5$: **C09K 19/20**, C09K 19/30, C09K 19/34

(21) Anmeldenummer: **89902772.6**

(22) Anmeldetag: **27.02.89**

(86) Internationale Anmeldenummer: **PCT/EP89/00183**

(87) Internationale Veröffentlichungsnummer: **WO 89/08688 (21.09.89 89/23)**

(54) **DERIVATE DER 2,3-DIFLUORBENZOESÄURE.**

(30) Priorität: **10.03.88 DE 3807823**
**10.03.88 DE 3807870**
**10.03.88 DE 3807955**

(43) Veröffentlichungstag der Anmeldung: **21.03.90 Patentblatt 90/12**

(45) Bekanntmachung des Hinweises auf die Patenterteilung: **10.02.93 Patentblatt 93/06**

(84) Benannte Vertragsstaaten: **CH DE FR GB IT LI NL**

(56) Entgegenhaltungen:
**WO-A-88/09322**
**DE-A- 2 939 782**
**FR-A- 2 466 496**
**FR-A- 2 612 182**

(73) Patentinhaber: **MERCK PATENT GESELLSCHAFT MIT BESCHRÄNKTER HAFTUNG**
**Frankfurter Strasse 250 Postfach 4119**
**W-6100 Darmstadt(DE)**

(72) Erfinder: **REIFFENRATH, Volker**
**Jahnstrasse 18**
**W-6101 Rossdorf(DE)**
Erfinder: **KRAUSE, Joachim**
**Samuel-Morse-Strasse 14**
**W-6110 Dieburg(DE)**
Erfinder: **WÄCHTLER, Andreas**
**Goethestrasse 34**
**W-6103 Griesheim(DE)**
Erfinder: **WEBER, Georg**
**Wilhelm-Leuschner-Strasse 38**
**W-6106 Erzhausen(DE)**
Erfinder: **GEELHAAR, Thomas**
**Trajanstrasse 12**
**W-6500 Mainz(DE)**

**EP 0 358 741 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Molecular Crystals and Liquid Crystals, Band 116, Nr.1/2, 1984, Godon and Breach, Science publishers, Inc. and OPA Ltd, (US), M.A.Osman et al: "Ketones-nematogens with moderate negative dielectric anisotropy and high clearing points" Seiten 141-52

Patents Abstracts of Japan, Band 11, Nr. 75 (C-408) (2522), 6. März 1987

Patent Abstracts of Japan, Band 9, Nr. 160 (C-289)(1883), 4. Juli 1985

Patent Abstracts of Japan, Band 9, Nr. 218 (C-301)(1941), 5. September 1985

Patent Abstracts of Japan, Band 9, Nr. 175 (C292)(1898), 19. Juli 1985

Patent Abstracts of Japan, Band 10, Nr. 276 (C-373)(2332), 19. September 1986

**Beschreibung**

Die Erfindung betrifft Derivate der 2,3-Difluorbenzoesäure der Formel I,

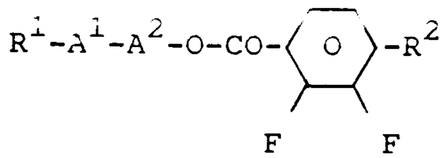

I

worin

- $R^1$ und $R^2$ jeweils unabhängig voneinander eine Alkylgruppe mit 1 bis 15 C-Atomen, worin auch eine oder zwei nicht benachbarte $CH_2$-Gruppen durch -O-, -CO-, -CH = CH- und/oder -C≡C- ersetzt sein können, und
- $A^1$ und $A^2$ jeweils unabhängig voneinander unsubstituiertes oder durch ein oder zwei Fluor substituiertes 1,4-Phenylen, worin auch eine oder zwei CH-Gruppen durch N ersetzt sein können, trans-1,4-Cyclohexylen, oder eine der beiden Gruppen $A^1$ und $A^2$ auch eine Einfachbindung

bedeuten.

Der Einfachheit halber bedeuten im folgenden Cyc eine 1,4-Cyclohexylengruppe, Phe eine 1,4-Phenylengruppe, Pyd eine Pyridin-2,5-diylgruppe, Pyr eine Pyrimidin-2,5-diylgruppe, Pyn eine Pyridazin-2,5-diylgruppe, wobei diese Gruppen unsubstituiert oder durch ein oder zwei Fluor substituiert sein können. Vorzugsweise sind diese Gruppen unsubstituiert.

$PheF_2$ bedeutet eine Gruppe der Formel

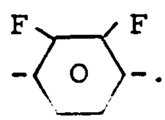

Die Verbindungen der Formel I können als Komponenten flüssigkristalliner Phasen verwendet werden, insbesondere für Displays, die auf dem Prinzip der verdrillten Zelle, dem Guest-Host-Effekt, dem Effekt der Deformation aufgerichteter Phasen oder dem Effekt der dynamischen Streuung beruhen.

Die Verbindungen der Formel I zeichnen sich durch eine deutlich negative Anisotropie der Dielektrizitätskonstante aus und werden in einem elektrischen Feld mit ihren Molekülängsachsen senkrecht zur Feldrichtung ausgerichtet. Dieser Effekt ist bekannt und wird zur Steuerung der optischen Transparenz in verschiedenen Flüssigkristallanzeigen ausgenützt, so z.B. in Flüssigkristallzellen vom Lichtstreuungstyp (dynamische Streuung), vom sogenannten DAP-Typ (Deformation aufgerichteter Phasen) oder ECB-Typ (electrically controlled birefringence) oder vom Gast/Wirt-Typ (guest host interaction).

Weiterhin eignen sich Verbindungen der Formel I als Komponenten chiral getilteter smektischer Phasen. Chirale getiltete smektische flüssigkristalline Phasen mit ferroelektrischen Eigenschaften können hergestellt werden, in dem man Basis-Mischungen mit einer oder mehreren getilteten smektischen Phasen mit einem geeigneten chiralen Dotierstoff versetzt (L.A. Veresnev et al., Mol. Cryst. Liq. Cryst. 89, 327 (1982); H.R. Brand et al., J. Physique 44 (lett.), L-771 (1983). Solche Phasen können als Dielektrika für schnell schaltende Displays verwendet werden, die z.B. auf dem von Clark und Lagerwall beschriebenen Prinzip der SSFLC-Technologie (N.A. Clark und S.T. Lagerwall, Appl. Phys. Lett. 36, 899 (1980); USP 4,367,924) auf der Basis der ferroelektrischen Eigenschaften der chiralen getilteten Phase beruhen.

Es sind bisher bereits eine Reihe von flüssigkristallinen Verbindungen mit schwach negativer dielektrischer Anisotropie synthetisiert worden. Hingegen sind noch relativ wenig Flüssigkristallkomponenten mit großer negativer Anisotropie der Dielektrizitätskonstante bekannt. Zudem weisen letztere im allgemeinen Nachteile auf, wie z.B. schlechte Löslichkeit in Mischungen, hohe Viskosität, hohe Schmelzpunkte und chemische Instabilität. Es besteht daher ein Bedarf an weiteren Verbindungen mit negativer dielektrischer Anisotropie, die es erlauben, die Eigenschaften von Mischungen für verschiedenste elektro-optische Anwendungen weiter zu verbessern.

Flüssigkristallverbindungen mit negativer dielektrischer Anisotropie, welche zwei oder drei über Carboxylgruppen oder Kovalenzbindung verknüpfte Ringe und eine oder mehrere seitliche Gruppen, wie Halogen,

Cyano oder Nitrogruppen aufweisen, sind bekannt aus DE 22 40 864, DE 26 13 293, DE 28 35 662, DE 28 36 086 und EP 023 728.

In der EP 084 194 werden in einer breiten Formel die hier beanspruchten Verbindungen umfaßt. Jedoch sind dort keine Einzelverbindungen der erfindungsgemäßen Formel genannt. Der Fachmann konnte somit aus dem Stand der Technik weder in einfacher Art und Weise Synthesemöglichkeiten für die beanspruchten Verbindungen entnehmen noch erkennen, daß die erfindungsgemäßen Verbindungen überwiegend günstig gelegene Mesophasenbereiche aufweisen und sich durch eine große negative Anisotropie der Dielektrizität bei gleichzeitiger niedriger Viskosität auszeichnen.

Auch fehlt dort jeglicher Hinweis auf die Möglichkeit des Einsatzes der erfindungsgemäßen Verbindungen in Displays, die auf der SSFLC-Technologie beruhen, da die dort beanspruchten Verbindungen geringe smektische Tendenzen aufweisen.

Weiterhin sind Dibenzoesäureester des 2,3-Dichlorhydrochinons bekannt (z.B. Bristol et al., J. Org. Chem. 39, 3138 (1974) oder Clanderman et al., J. Am. Chem. Soc. 97, 1585 (1975)), die allerdings monotrop sind bzw. sehr kleine Mesophasenbereiche aufweisen.

Die aus der DE OS 29 33 563 bekannten 4-Alkyl-2,3-dichlorphenyl-4'-alkylbicyclohexyl-4-carbonsäureester erlauben wegen ihrer hohen Viskosität keine technische Anwendung.

Der Erfindung lag die Aufgabe zugrunde stabile, flüssigkristalline oder mesogene Verbindungen mit einer großen negativen Anisotropie der Dielektrizität und gleichzeitig geringer Viskosität aufzuzeigen.

Es wurde gefunden, daß die Verbindungen der Formel I als Komponenten flüssigkristalliner Phasen vorzüglich geeignet sind. Insbesondere sind mit ihrer Hilfe stabile flüssigkristalline Phasen mit breitem Mesophasenbereich und vergleichsweise niedriger Viskosität herstellbar.

Weiterhin eignen sich die Verbindungen der Formel I als Komponenten chiraler getilteter smektischer flüssigkristalliner Phasen.

Mit der Bereitstellung der Verbindungen der Formel I wird außerdem ganz allgemein die Palette der flüssigkristallinen Substanzen, die sich unter verschiedenen anwendungstechnischen Gesichtspunkten zur Herstellung flüssigkristalliner Gemische eignen, erheblich verbreitert.

Die Verbindungen der Formel I besitzen einen breiten Anwendungsbereich. In Abhängigkeit von der Auswahl der Substituenten können diese Verbindungen als Basismaterialien dienen, aus denen flüssigkristalline Phasen zum überwiegenden Teil zusammengesetzt sind; es können aber auch Verbindungen der Formel I flüssigkristallinen Basismaterialien aus anderen Verbindungsklassen zugesetzt werden, um beispielsweise die dielektrische und/oder optische Anisotropie und/oder die Viskosität und/oder die spontane Polarisation und/oder die Phasenbereiche und/oder den Tiltwinkel und/oder den Pitch eines solchen Dielektrikums zu varriieren.

Die Verbindungen der Formel I eignen sich ferner als Zwischenprodukte zur Herstellung anderer Substanzen, die sich als Bestandteile flüssigkristalliner Dielektrika verwenden lassen.

Die Verbindungen der Formel I sind in reinem Zustand farblos und bilden flüssigkristalline Mesophasen in einem für die elektrooptische Verwendung günstig gelegenen Temperaturbereich. Chemisch, thermisch und gegen Licht sind sie sehr stabil.

Gegenstand der Erfindung sind somit die Verbindungen der Formel I sowie ein Verfahren zu ihrer Herstellung, dadurch gekennzeichnet, daß man eine entsprechende Carbonsäure oder eines ihrer reaktionsfähigen Derivate mit einer entsprechenden Hydroxyverbindung oder einem seiner reaktionsfähigen Derivate umsetzt.

Weiterhin ist Gegenstand der Erfindung die Verwendung der Verbindungen der Formel I als Komponenten flüssigkristalliner Phasen. Gegenstand der Erfindung sind ferner flüssigkristalline Phasen mit einem Gehalt an mindestens einer Verbindung der Formel I, sowie Flüssigkristall-Anzeigeelemente, die derartige Phasen enthalten. Derartige Phasen weisen besonders vorteilhafte elastische Konstanten auf, und eignen sich wegen ihrer niedrigen $\Delta\epsilon/\epsilon_\perp$ -Werte besonders für TFT-Mischungen.

Unter den Verbindungen der Formel I sind diejenigen bevorzugt, bei denen mindestens eine der Gruppen $A^1$ und $A^2$ eine 1,4-Phenylengruppe bedeutet, worin eine oder zwei CH-Gruppen durch N ersetzt sind.

Weiterhin bevorzugt sind Verbindungen der Formel I, bei denen
$-A^1-A^2-$

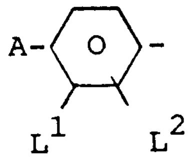

bedeutet worin

A unsubstituiertes oder durch ein oder zwei Fluor substituiertes 1,4-Phenylen, trans-1,4-Cyclohexylen oder eine Einfachbindung, und

$L^1$ und $L^2$ jeweils unabhängig voneinander H oder F bedeuten.

Schließlich sind Verbindungen der Formel I bevorzugt, bei denen

$-A^1-A^2-$

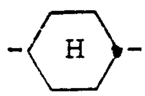 oder 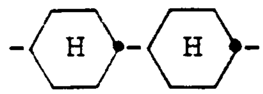

bedeutet.

Dementsprechend sind insbesondere diejenigen Verbindungen sowie das genannte Verfahren zu ihrer Herstellung und deren Verwendung als Komponenten flüssigkristalliner Phasen, z.B. in Flüssigkristallanzeigeelementen, Gegenstand der Erfindung, bei denen $-A^1-A^2-$ die genannten bevorzugten Bedeutungen besitzt.

Vor- und nachstehend haben $R^1$, $R^2$, A, $A^1$, $A^2$, $L^1$ und $L^2$ die angegebene Bedeutung, sofern nicht ausdrücklich etwas anderes vermerkt ist.

Die Verbindungen der Formel I umfassen dementsprechend Verbindungen mit zwei Ringen der Teilformeln Ia bis Ie:

$R^1$-Pyd-OCO-$PheF_2$-$R^2$ Ia

$R^1$-Pyr-OCO-$PheF_2$-$R^2$ Ib

$R^1$-Pyn-OCO-$PheF_2$-$R^2$ Ic

$R^1$-Phe-OCO-$PheF_2$-$R^2$ Id

$R^1$-Cyc-OCO-$PheF_2$-$R^2$ Ie

und Verbindungen mit drei Ringen der Teilformeln If bis Il

$R^1$-Phe-Pyd-OCO-$PheF_2$-$R^2$ If

$R^1$-Phe-Pyr-OCO-$PheF_2$-$R^2$ Ig

$R^1$-Phe-Pyn-OCO-$PheF_2$-$R^2$ Ih

$R^1$-Phe-Phe-OCO-$PheF_2$-$R^2$ Ii

$R^1$-Cyc-Phe-OCO-$PheF_2$-$R^2$ IK

$R^1$-Cyc-Cyc-OCO-$PheF_2$-$R^2$ Il

$R^1$-Pyd-Phe-OCO-$PheF_2$-$R^2$ Im

$R^1$-Pyr-Phe-OCO-$PheF_2$-$R^2$ In

$R^1$-Pyn-Phe-OCO-$PheF_2$-$R^2$ Io

$R^1$-Pyd-Cyc-OCO-Phe$F_2$-$R^2$ Ip

$R^1$-Pyr-Cyc-OCO-Phe$F_2$-$R^2$ Iq

$R^1$-Pyn-Cyc-OCO-Phe$F_2$-$R^2$ Ir

$R^1$-Cyc-Pyd-OCO-Phe$F_2$-$R^2$ Is

$R^1$-Cyc-Pyr-OCO-Phe$F_2$-$R^2$ It

$R^1$-Cyc-Pyn-OCO-Phe$F_2$-$R^2$ Iu

Darunter sind diejenigen der Teilformeln Ii, Ik, Il, Im, In und Io besonders bevorzugt.

In den Verbindungen der vor- und nachstehenden Formeln bedeuten $R^1$ und $R^2$ vorzugsweise Alkyl oder Alkoxy.

Weiterhin bevorzugt sind Verbindungen der vor- und nachstehenden Formeln, in denen einer der Reste $R^1$ und $R^2$, Alkenyl oder Oxaalkyl (z.B. Alkoxymethyl) bedeutet.

$A^1$ und $A^2$ sind bevorzugt unsubstituiertes 1,4-Phenylen, Cyc, Pyd oder Pyr; bevorzugt enthält die Verbindung der Formel I nicht mehr als jeweils einen der Reste Pyd, Pyn, Pyr oder 2,3-Difluor-1,4-phenylen.

In Verbindungen, in denen mindestens eine der Gruppen $A^1$ und $A^2$ 1,4-Phenylen bedeutet, worin ein oder zwei CH-Gruppen durch N ersetzt sind, ist vorzugsweise mindestens eine der Gruppen $A^1$ und $A^2$ (vorzugsweise jedoch nur eine der beiden Gruppen) Pyridin-2,5-diyl, Pyrimidin-2,5-diyl oder Pyrazin-3,6-diyl. Bevorzugt sind dabei Pyridin-2,5-diyl und Pyrimidin-2,5-diyl.

A bedeutet vorzugsweise unsubstituiertes 1,4-Phenylen oder Cyc.

$R^1$ und $R^2$ weisen in den vor- und nachstehenden Formeln vorzugsweise 2-12 C-Atome, insbesondere 3-10 C-Atome auf. In $R^1$ und $R^2$ Können auch eine oder zwei $CH_2$-Gruppen ersetzt sein. Vorzugsweise ist nur eine $CH_2$-Gruppe ersetzt durch -O-, oder -CH = CH-.

In den vor- und nachstehenden Formeln bedeuten $R^1$ und $R^2$ vorzugsweise Alkyl, Alkoxy oder eine andere Oxaalkylgruppe, ferner auch Alkylgruppen, in denen eine oder zwei $CH_2$-Gruppen durch -CH = CH-ersetzt sein können.

Falls $R^1$ und $R^2$ Alkylreste, in denen auch eine ("Alkoxy" bzw. "Oxaalkyl") oder zwei ("Alkoxyalkoxy" bzw. "Dioxaalkyl") nicht benachbarte $CH_2$-Gruppen durch O-Atome ersetzt sein können, bedeuten, so können sie geradkettig oder verzweigt sein. Vorzugsweise sind sie geradkettig, haben 2, 3, 4, 5, 6 oder 7 C-Atome und bedeuten demnach bevorzugt Ethyl, Propyl, Butyl, Pentyl, Hexyl, Heptyl, Ethoxy, Propoxy, Butoxy, Pentoxy, Hexoxy oder Heptoxy, ferner Methyl, Octyl, Nonyl, Decyl, Undecyl, Dodecyl, Tridecyl, Tetradecyl, Pentadecyl, Methoxy, Octoxy, Nonoxy, Decoxy, Undecoxy, Dodecoxy, Tridecoxy oder Tetradecoxy.

Oxaalkyl bedeutet vorzugsweise geradkettiges 2-Oxypropyl (= Methoxymethyl), 2- (= Ethoxymethyl) oder 3-Oxabutyl (= 2-Methoxyethyl), 2-, 3- oder 4-Oxapentyl, 2-, 3-, 4- oder 5-Oxahexyl, 2-, 3-, 4-, 5- oder 6-Oxaheptyl, 2-, 3-, 4-, 5-, 6- oder 7-Oxaoctyl, 2-, 3-, 4-, 5-, 6-, 7- oder 8-Oxanonyl, 2-, 3-, 4-, 5-, 6-, 7-, 8- oder 9-Oxadecyl, 1,3-Dioxabutyl (= Methoxymethoxy), 1,3-, 1,4-, 2,4-Dioxapentyl, 1,3-, 1,4-, 1,5-, 2,4-, 2,5- oder 3,5-Dioxahexyl, 1,3-, 1,4-, 1,5-, 1,6-, 2,4-, 2,5-, 2,6-, 3,5-, 3,6- oder 4,6-Dioxaheptyl.

Falls $R^1$ und $R^2$ einen Alkylrest bedeuten, in dem eine $CH_2$-Gruppe durch -CH = CH- ersetzt ist, so ist die trans-Form bevorzugt. Dieser Alkenylrest kann geradkettig oder verzweigt sein. Vorzugsweise ist er geradkettig und hat 2 bis 10 C-Atome. Er bedeutet demnach besonders Vinyl, Prop-1-, oder Prop-2-enyl, But-1-, 2- oder But-3-enyl, Pent-1-, 2-, 3- oder Pent-4-enyl, Hex-1-, 2-, 3-, 4- oder Hex-5-enyl, Hept-1-, 2-, 3-, 4-, 5- oder Hept-6-enyl, Oct-1-, 2-, 3-, 4-, 5-, 6- oder Oct-7-enyl, Non-1-, 2-, 3-, 4-, 5-, 6-, 7- oder Non-8-enyl, Dec-1-, 2-, 3-, 4-, 5-, 6-, 7-, 8-oder Dec-9-enyl.

Verbindungen der Formel I mit verzweigten Flügelgruppen $R^1$ und/oder $R^2$können gelegentlich wegen einer besseren Löslichkeit in den üblichen flüssigkristallinen Basismaterialien von Bedeutung sein, insbesondere aber als chirale Dotierstoffe, wenn sie optisch aktiv sind. Smektische Verbindungen dieser Art eignen sich als Komponenten für ferroelektrische Materialien.

Verzweigte Gruppen dieser Art enthalten in der Regel nicht mehr als eine Kettenverzweigung. Bevorzugte verzweigte Reste $R^1$ und/oder $R^2$ sind Isopropyl, 2-Butyl (= 1-Methylpropyl), Isobutyl (= 2-Methylpropyl), 2-Methylbutyl, Isopentyl (= 3-Methylbutyl) 2-Methylpentyl, 3-Methylpentyl, 2-Ethylhexyl, 2-Propylpentyl, Isopropoxy, 2-Methylpropoxy, 2-Methylbutoxy, 3-Methylbutoxy, 2-Methylpentoxy, 3-Methylpentoxy, 2-Ethylhexoxy, 1-Methylhexoxy, 1-Methylheptoxy, 2-Oxa-3-methylbutyl, 3-Oxa-4-methylpentyl, 4-Methylhexyl, 2-Nonyl, 2-Decyl, 2-Dodecyl, 6-Methyloctoxy.

Formel I umfaßt sowohl die Racemate dieser Verbindungen als auch die optischen Antipoden sowie deren Gemische.

Unter den Verbindungen der Formeln I sowie Ia bis Iu sind diejenigen bevorzugt, in denen mindestens einer der darin enthaltenen Reste eine der angegebenen bevorzugten Bedeutungen hat.

Die Verbindungen der Formel I werden nach an sich bekannten Methoden hergestellt, wie sie in der Literatur (z. B. in den Standardwerken wie Houben-Weyl, Methoden der Organischen Chemie, Georg-Thieme-Verlag, Stuttgart) beschrieben sind, und zwar unter Reaktionsbedingungen, die für die genannten Umsetzungen bekannt und geeignet sind. Dabei kann man auch von an sich bekannten, hier nicht näher erwähnten Varianten Gebrauch machen.

Die Ausgangsstoffe können gewünschtenfalls auch in situ gebildet werden, derart, daß man sie aus dem Reaktionsgemisch nicht isoliert, sondern sofort weiter zu den Verbindungen der Formel I umsetzt.

Verbindungen der Formel I sind ausgehend von 1,2-Difluorbenzol zugänglich. Dieses wird nach bekanntem Verfahren (z.B. A.M. Roe et al., J. Chem. Soc. Chem. Comm., 22, 582 (1965)) metalliert und mit dem entsprechenden Elektrophil umgesetzt. Mit dem so erhaltenen 1-$R^2$-2,3-Difluorobenzol läßt sich diese Reaktionssequenz ein zweites Mal mit $CO_2$ als Elektrophil durchführen und man gelangt so zu den 2,3-Difluor-4-$R^2$-benzoesäuren. 1,2-Difluorbenzol bzw. 1-$R^2$-2,3-Difluorbenzol wird in einem inerten Lösungsmittel wie Diethylether, Tetrahydrofuran, Dimethoxyethan, tert-Butylmethylether oder Dioxan, Kohlenwasserstoffen wie Hexan, Heptan, Cyclohexan, Benzol oder Toluol oder Gemischen dieser Lösungsmittel gegebenenfalls unter Zusatz eine Komplexierungsmittels wie Tetramethylethylendiamin (TMEDA) oder Hexamethylphosphorsäuretriamid mit Phenyllithium, Lithiumtetramethylpiperidin, n- sek- oder tert-Butyllithium bei Temperaturen von -100 °C bis +50 °C, vorzugsweise -78 °C bis 0 °C,umgesetzt.

Die Lithium-2,3-difluorphenyl-Verbindungen werden bei -100 °C bis 0 °C vorzugsweise bei -50 °C mit den entsprechenden Elektrophilen umgesetzt. Geeignete Elektrophile sind Aldehyde, Ketone, Nitrile, Epoxide, Carbonsäure-Derivate wie Ester, Anhydride oder Halogenide, Halogenameisensäureester oder Kohlendioxid.

Zur Umsetzung mit aliphatischen oder aromatischen Halogen-Verbindungen werden die Lithium-2,3-difluorphenyl-Verbindungen transmetalliert und unter Übergangsmetallkatalyse gekoppelt. Besonders geeignet sind hierfür die Zink- (vgl. DE OS 36 32 410) oder die Titan-2,3-difluorphenyl-Verbindungen (vgl. DE OS 37 36 489).

Die Verbindungen der Formel I können hergestellt werden durch Veresterung entsprechender Carbonsäuren (oder ihrer reaktionsfähigen Derivate) mit Alkoholen bzw. Phenolen (oder ihren reaktionsfähigen Derivaten).

Als reaktionsfähige Derivate der genannten Carbonsäuren eignen sich insbesondere die Säurehalogenide, vor allem die Chloride und Bromide, ferner die Anhydride, z. B. auch gemischte Anhydride, Azide oder Ester, insbesondere Alkylester mit 1-4 C-Atomen in der Alkylgruppe.

Als reaktionsfähige Derivate der genannten Alkohole bzw. Phenole kommen insbesondere die entsprechenden Metallalkoholate bzw. Phenolate, vorzugsweise eines Alkalimetalls wie Na oder K, in Betracht.

Die Veresterung wird vorteilhaft in Gegenwart eines inerten Lösungsmittels durchgeführt. Gut geeignet sind insbesondere Ether wie Diethylether, Di-n-butylether, THF, Dioxan oder Anisol, Ketone wie Aceton, Butanon oder Cyclohexanon, Amide wie DMF oder Phosphorsäure-hexamethyltriamid, Kohlenwasserstoffe wie Benzol, Toluol oder Xylol, Halogenkohlenwasserstoffe wie Tetrachlorkohlenstoff oder Tetrachlorethylen und Sulfoxide wie Dimethylsulfoxid oder Sulfolan. Mit Wasser nicht mischbare Lösungsmittel können gleichzeitig vorteilhaft zum azeotropen Abdestillieren des bei der Veresterung gebildeten Wassers verwendet werden. Gelegentlich kann auch ein Überschuß einer organischen Base, z.B. Pyridin, Chinolin oder Triethylamin als Lösungsmittel für die Veresterung angewandt werden. Die Veresterung kann auch in Abwesenheit eines Lösungsmittels, z.B. durch einfaches Erhitzen der Komponenten in Gegenwart von Natriumacetat, durchgeführt werden. Die Reaktionstemperatur liegt gewöhnlich zwischen -50 ° und +250 °, vorzugsweise zwischen -20 ° und +80 °. Bei diesen Temperaturen sind die Veresterungsreaktionen in der Regel nach 15 Minuten bis 48 Stunden beendet.

Im einzelnen hängen die Reaktionsbedingungen für die Veresterung weitgehend von der Natur der verwendeten Ausgangsstoffe ab. So wird eine freie Carbonsäure mit einem freien Alkohol oder Phenol in der Regel in Gegenwart einer starken Säure, beispielsweise einer Mineralsäure wie Salzsäure oder Schwefelsäure, umgesetzt. Eine bevorzugte Reaktionsweise ist die Umsetzung eines Säureanhydrids oder insbesondere eines Säurechlorids mit einem Alkohol, vorzugsweise in einem basischen Milieu, wobei als Basen insbesondere Alkalimetallhydroxide wie Natrium- oder Kaliumhydroxid, Alkalimetallcarbonate bzw. -hydrogencarbonate wie Natriumcarbonat, Natriumhydrogencarbonat, Kaliumcarbonat oder Kaliumhydrogencarbonat, Alkalimetallacetate wie Natrium- oder Kaliumacetat, Erdalkalimetallhydroxide wie Calciumhydroxid oder organische Basen wie Triethylamin, Pyridin, Lutidin, Collidin oder Chinolin von Bedeutung sind. Eine weitere bevorzugte Ausführungsform der Veresterung besteht darin, daß man den Alkohol bzw. das Phenol zunächst in das Natrium- oder Kaliumalkoholat bzw. -phenolat überführt, z.B. durch Behandlung mit ethanolischer Natron- oder Kalilauge, dieses isoliert und zusammen mit Natriumhydrogencarbonat oder Kaliumcarbonat unter Rühren in Aceton oder Diethylether suspendiert und diese Suspension mit einer Lösung des Säurechlorids oder Anhydrids in Diethylether, Aceton oder DMF versetzt, zweckmäßig bei Temperaturen zwischen etwa -25 ° und +20 °.

Die erfindungsgemäßen flüssigkristallinen Medien enthalten vorzugsweise neben einer oder mehreren erfindungsgemäßen Verbindungen als weitere Bestandteile 2 bis 40, insbesondere 4 bis 30 Komponenten. Ganz besonders bevorzugt enthalten diese Medien neben einer oder mehreren erfindungsgemäßen Verbindungen 7 bis 25 Komponenten. Diese weiteren Bestandteile werden vorzugsweise ausgewählt aus nematischen oder nematogenen (monotropen oder isotropen) Substanzen, insbesondere Substanzen aus den Klassen der Azoxybenzole, Benzylidenaniline, Biphenyle, Terphenyle, Phenyl- oder Cyclohexylbenzoate, Cyclohexan-carbonsäurephenyl- oder cyclohexyl-ester, Phenyl- oder Cyclohexylester der Cyclohexylbenzoesäure, Phenyl- oder Cyclohexylester der Cyclohexylcyclohexancarbonsäure, Cyclohexylphenylester der Benzoesäure, der Cyclohexancarbonsäure, bzw. der Cyclohexylcyclohexancarbonsäure, Phenylcyclohexane, Cyclohexylbiphenyle, Phenylcyclohexylcyclohexane, Cyclohexylcyclohexane, Cyclohexylcyclohexene, Cyclohexylcyclohexylcyclohexene, 1,4-Bis-cyclohexylbenzole, 4,4'-Bis-cyclohexylbiphenyle, Phenyl- oder Cyclohexylpyrimidine Phenyl- oder Cyclohexylpyridine, Phenyl- oder Cyclohexyldioxane, Phenyl- oder Cyclohexyl-1,3-dithiane, 1,2-Diphenylethane, 1,2-Dicyclohexylethane, 1-Phenyl-2-cyclohexylethane, 1-Cyclohexyl-2-(4-phenyl-cyclohexyl)-ethane, 1-Cyclohexyl-2-biphenylylethane, 1-Phenyl-2-cyclohexylphenylethane, gegebenenfalls halogenierten Stilbene, Benzylphenylether, Tolane und substituierten Zimtsäuren. Die 1,4-Phenylengruppen in diesen Verbindungen können auch fluoriert sein.

Die wichtigsten als weitere Bestandteile erfindungsgemäßer Medien in Frage kommenden Verbindungen lassen sich durch die Formeln 1, 2, 3, 4 und 5 charakterisieren:

R'-L-E-R'' 1

R'-L-COO-E-R'' 2

R'-L-OOC-E-R'' 3

R'-L-$CH_2CH_2$-E-R'' 4

R'-L-C≡C-E-R'' 5

In den Formeln 1, 2, 3, 4 und 5 bedeuten L und E, die gleich oder verschieden sein können, jeweils unabhängig voneinander einen bivalenten Rest aus der aus -Phe-, -Cyc-, -Phe-Phe-, -Phe-Cyc-, -Cyc-Cyc-, -Pyr-, -Dio-, -G-Phe- und -G-Cyc- sowie deren Spiegelbilder gebildeten Gruppe, wobei Phe unsubstituiertes oder durch Fluor substituiertes 1,4-Phenylen, Cyc trans-1,4-Cyclohexylen oder 1,4-Cyclohexenylen, Pyr Pyrimidin-2,5-diyl oder Pyridin-2,5-diyl, Dio 1,3-Dioxan-2,5-diyl und G 2-(trans-1,4-Cyclohexyl)-ethyl, Pyrimidin-2,5-diyl, Pyridin-2,5-diyl oder 1,3-Dioxan-2,5-diyl bedeuten.

Vorzugsweise ist einer der Rest L und E Cyc, Phe oder Pyr. E ist vorzugsweise Cyc, Phe oder Phe-Cyc. Vorzugsweise enthalten die erfindungsgemäßen Medien eine oder mehrere Komponenten ausgewählt aus den Verbindungen der Formeln 1, 2, 3, 4 und 5, worin L und E ausgewählt sind aus der Gruppe Cyc, Phe und Pyr und gleichzeitig eine oder mehrere Komponenten ausgewählt aus den Verbindungen der Formeln 1, 2, 3, 4 und 5, worin einer der Reste L und E ausgewählt ist aus der Gruppe Cyc, Phe und Pyr und der andere Rest ausgewählt ist aus der Gruppe -Phe-Phe-, -Phe-Cyc-, -Cyc-Cyc-, -G-Phe- und -G-Cyc-, und gegebenenfalls eine oder mehrere Komponenten ausgewählt aus den Verbindungen der Formeln 1, 2, 3, 4 und 5, worin die Reste L und E ausgewählt sind aus der Gruppe -Phe-Cyc-, -Cyc-Cyc-, -G-Phe- und -G-Cyc-.

R' und R'' bedeuten in den Verbindungen der Teilformeln 1a, 2a, 3a, 4a und 5a jeweils unabhängig voneinander Alkyl, Alkenyl, Alkoxy, Alkenyloxy oder Alkanoyloxy mit bis zu 8 Kohlenstoffatomen. Bei den meisten dieser Verbindungen sind R' und R'' voneinander verschieden, wobei einer dieser Reste meist Alkyl oder Alkenyl ist. In den Verbindungen der Teilformeln 1b, 2b, 3b, 4b und 5b bedeutet R'' -CN, $-CF_3$, F, Cl oder -NCS; R hat dabei die bei den Verbindungen der Teilformeln 1a bis 5a angegebene Bedeutung und ist vorzugsweise Alkyl oder Alkenyl. Aber auch andere Varianten der vorgesehenen Substituenten in

den Verbindungen der Formeln 1, 2, 3, 4 und 5 sind gebräuchlich. Viele solcher Substanzen oder auch Gemische davon sind im Handel erhältlich. Alle diese Substanzen sind nach literaturbekannten Methoden oder in Analogie dazu erhältlich.

Die erfindungsgemäßen Medien enthalten vorzugsweise neben Komponenten aus der Gruppe der Verbindungen 1a, 2a, 3a, 4a und 5a (Gruppe 1) auch Komponenten aus der Gruppe der Verbindungen 1b, 2b, 3b, 4b und 5b (Gruppe 2), deren Anteile vorzugsweise die folgt sind:

Gruppe 1: 20 bis 90 %, insbesondere 30 bis 90 %,

Gruppe 2: 10 bis 80 %, insbesondere 10 bis 50 %,

wobei die Summe der Anteile der erfindungsgemäßen Verbindungen und der Verbindungen aus den Gruppen 1 und 2 bis zu 100 % ergeben.

Die erfindungsgemäßen Medien enthalten vorzugsweise 1 bis 40 %, insbesondere vorzugsweise 5 bis 30 % an erfindungsgemäßen Verbindungen. Weiterhin bevorzugt sind Medien, enthaltend mehr als 40 %, insbesondere 45 bis 90 % an erfindungegemäßen Verbindungen. Die Medien enthalten vorzugsweise drei, vier oder fünf erfindungsgemäße Verbindungen.

Die Herstellung der erfindungsgemäßen Medien erfolgt in an sich üblicher Weise. In der Regel werden die Komponenten ineinander gelöst, zweckmäßig bei erhöhter Temperatur. Durch geeignete Zusätze können die flüssigkristallinen Phasen nach der Erfindung so modifiziert werden, daß sie in allen bisher bekannt gewordenen Arten von Flüssigkristallanzeigeelementen verwendet werden können.

Derartige Zusätze sind dem Fachmann bekannt und in der Literatur ausführlich beschrieben (H. Kelker/R. Hatz, Handbook of Liquid Crystals, Verlag Chemie, Weinheim, 1980). Beispielsweise können pleochroitische Farbstoffe zur Herstellung farbiger Guest-Host-Systeme oder Substanzen zur Veränderung der dielektrischen Anisotropie, der Viskosität und/oder der Orientierung der nematischen Phasen zugesetzt werden.

Die folgenden Beispiele sollen die Erfindung erläutern, ohne sie zu begrenzen. mp. = Schmelzpunkt, cp. = Klärpunkt Vor- und nachstehend bedeuten Prozentangaben Gewichtsprozent; alle Temperaturen sind in Grad Celsius angegeben. "Übliche Aufarbeitung" bedeutet: man gibt Wasser hinzu, extrahiert mit Methylenchlorid, trennt ab, trocknet die organische Phase, dampft ein und reinigt das Produkt durch Kristallisation und/oder Chromatographie.

Es bedeuten ferner:

K: Kristallin-fester Zustand, S: smektische Phase (der Index kennzeichnet den Phasentyp), N: nematischer Zustand, Ch: cholesterische Phase, I: isotrope Phase. Die zwischen zwei Symbolen stehende Zahl gibt die Umwandlungstemperatur in Grad Celsius an.

Beispiel 1:

0,1 mol 2,3-Difluor-4-ethoxybenzoesäure (herstellbar aus 2,3-Difluorphenol durch Alkylierung mit Diethylsulfat/Kaliumcarbonat in Dimethylformamid, Metallierung des 2,3-Difluorphenetols in 4-Stellung mit Butyllithium/Tetramethylethylendiamin in Tetrahydrofuran bei -70 bis -80° und Umsetzung mit fester Kohlensäure), 0,01 mol 4-Dimethylaminopyridin und 0.1 mol 2-Pentyl-5-hydroxypyridin werden in 150 ml Dichlormethan vorgelegt, bei 10° unter Rühren eine Lösung von 0.1 mol Dicyclohexylcarbodiimid in 30 ml Dichlormethan zugetropft und anschließend 15 Stunden bei Raumtemperatur nachgerührt. Man saugt über Kieselgel ab und erhält nach üblicher Aufarbeitung 5-(2-Pentylpyridyl)-2,3-difluor-4-ethoxybenzoat.

Analog werden hergestellt:

2-(5-Octylpyridyl)-2,3-difluor-4-heptyloxybenzoat

2-(5-Nonylpyrimidyl)-2,3-difluor-4-nonyloxybenzoat

Beispiel 2:

Durch Lithiierung von o-Difluorbenzol bei -70 bis -80° und Umsetzung mit Propionaldehyd, Dehydratisierung des entstandenen sekundären Alkohols und anschließende Hydrierung der Doppelbindung erhält man 2,3-Difluorpropylbenzol. Erneute Metallierung und Umsetzung mit Trockeneis ergibt 2,3-Difluor-4-propylbenzoesäure. Aus dieser Säure erhält man analog Beispiel 1 durch Veresterung mit 2-(4-Hydroxyphenyl)-5-heptylpyrimidin und Dicyclohexylcarbodiimid [4-(5-Heptylpyrimidin-2-yl)-phenyl]-2,3-difluor-4-propylbenzoat, mp. 69°, cp. 138°

Analog werden hergestellt:

[4-(5-Heptylpyrimidin-2-yl)-phenyl]-2,3-difluor-4-octyloxybenzoat

Beispiel 3:

Durch Umsetzung von o-Difluorbenzol mit Butyllithium in Gegenwart von Kaliumtertiärbutylat bei -90 bis -100° in Tetrahydrofuran, Alkylierung der gebildeten Kaliumverbindung mit Nonylbromid/1,3-Dimethyltetrahydro-2-(1H)-pyrimidinon (DMPU), Isolierung des 2,3-Difluornonylbenzols, erneute Metallierung mittels Butyllithium und anschließende Reaktion mit festem Kohlendioxid erhält man 2,3-Difluor-4-nonylbenzoesäure.

Veresterung dieser Säure mit 2-(4-hydroxyphenyl)-5-octylpyridin analog Beispiel 1 ergibt [4-(5-Octylpyridin-2-yl)-phenyl]-2,3-difluor-4-nonylbenzoat.

Analog werden hergestellt:

[4-(5-Octylpyridin-2-yl)-phenyl]-2,3-difluor-4-octyloxybenzoat

Beispiel 4:

0,1 mol 2,3-Difluor-4-ethoxybenzoesäure (herstellbar aus 2,3-Difluorphenol durch Alkylierung mit Diethylsulfat/Kaliumcarbonat in Dimethylformamid, Metallierung des 2,3-Difluorphenetols in 4-Stellung mit Butyllithium/Tetramethylethylendiamin in Tetrahydrofuran (THF) bei -70 bis -80° und Umsetzung mit fester Kohlensäure), 0,01 mol 4-Dimethylaminopyridin und 0.1 mol trans-4-Propylcyclohexanol werden in 150 ml Dichlormethan vorgelegt, bei 10° unter Rühren eine Lösung von 0.1 mol Dicyclohexylcarbodiimid in 30 ml Dichlormethan zugetropft und anschließend 15 Stunden bei Raumtemperatur nachgerührt. Man saugt über Kieselgel ab verdampft das Lösungsmittel und erhält als Rückstand trans4-Propylcyclohexyl-2,3-difluor-4-ethoxybenzoat, das durch Kristallisation gereinigt wird. mp. 93°, cp. (48°).

Beispiel 5:

Durch Lithiierung von o-Difluorbenzol bei -70 bis -80° und Umsetzung mit Propionaldehyd, Dehydratisierung des entstandenen sekundären Alkohols und anschließende Hydrierung der Doppelbindung erhält man 2,3-Difluorpropylbenzol. Erneute Metallierung und Umsetzung mit Trockeneis ergibt 2,3-Difluor-4-propylbenzoesäure. Aus dieser Säure erhält man analog Beispiel 1 durch Veresterung mit trans-4-(trans-4-Propylcyclohexyl)-cyclohexanol und Dicyclohexylcarbodiimid [trans-4-(trans-4-Propylcyclohexyl)-cyclohexyl]-2,3-difluor-4-propylbenzoat, mp. 65°, cp. 165.2°

Analog wird hergestellt:

[trans-4-(trans-4-Pentylcyclohexyl)-cyclohexyl]-2,3-difluor-4-Octyloxybenzoat, K 90° $S_c$ 98 N 170,3 I

Beispiel 6:

Durch Umsetzung von o-Difluorbenzol mit Butyllithium in Gegenwart von Kaliumtertiärbutylat bei -90 bis -100° in Tetrahydrofuran, Alkylierung der gebildeten Kaliumverbindung mit Pentylbromid/1,3-Dimethyltetrahydro-2-(1H)-pyrimidinon (DMPU), Isolierung des 2,3-Difluorpentylbenzols, erneute Metallierung mittels Butyllithium und anschließende Reaktion mit festem Kohlendioxid erhält man 2,3-Difluor-4-pentylbenzoesäure. Veresterung dieser Säure mit trans-4-Pentylcyclohexanol ergibt trans-4-Pentylcyclohexyl-2,3-difluor-4-pentylbenzoat.

Beispiel 7:

0,1 mol 2,3-Difluor-4-ethoxybenzoesäure (herstellbar aus 2,3-Difluorphenol durch Alkylierung mit Diethylsulfat/Kaliumcarbonat in Dimethylformamid (DMF), Metallierung des 2,3-Difluorphenetols in 4-Stellung mit Butyllithium/Tetramethylethylendiamin in Tetrahydrofuran (THF) bei -70 bis -80° und Umsetzung mit fester Kohlensäure), 0.01 mol 4-Dimethylaminopyridin und 0.1 mol 4-Hydroxy-4'-pentylbiphenyl werden in 150 ml Dichlormethan vorgelegt, bei 10° unter Rühren eine Lösung von 0.1 mol Dicyclohexylcarbodiimid in 30 ml Dichlormethan zugetropft und anschließend 15 Stunden bei Raumtemperatur nachgerührt. Man saugt über Kieselgel ab, verdampft das Lösungsmittel und erhält als Rückstand 4-(4'-Pentylbiphenylyl)-2,3-difluor-4-ethoxybenzoat, das durch Kristallisation gereinigt wird; mp. 94 °, cp. 206,6 °

Beispiel 8:

Analog Beispiel 1 wird durch Umsetzung von 2,3-Difluor4-ethoxybenzoesäure mit 4-Pentylphenol (4-Pentylphenyl)-2,3-difluor-4-ethoxybenzoat erhalten; mp. 61°, cp. (50,7°)

Analog wird hergestellt:

(4-Octylphenyl)-2,3-difluor-4-octyloxybenzoat, K 37° $S_c$ 50° N 57,1° I

Beispiel 9:

Durch Lithierung von o-Difluorbenzol bei -70 bis -80° und Umsetzung mit Propionaldehyd, Dehydratisierung des entstandenen sekundären Alkohols und anschließende Hydrierung der Doppelbindung erhält man 2,3-Difluorpropylbenzol. Erneute Metallierung und Umsetzung mit Trockeneis ergibt 2,3-Difluor-4-propylbenzoesäure. Aus dieser Säure erhält man analog Beispiel 1 durch Veresterung mit 4-Pentyl-4'-hydroxybiphenylund Dicyclohexylcarbodiimid 4-(4'-Pentylbiphenyl)-2,3-difluor-4-propylbenzoat, K 74° $S_c$ 86° N 160,1° I

Beispiel 10:

Durch analoge Veresterung der 2,3-Difluor-4-propylbenzoesäure mit 4-(trans-4-Ethylcyclohexyl)-phenol erhält man [4-(trans-4-Ethylcyclohexyl)-phenyl]-2,3-difluor-4-propylbenzoat, K 70° N 134,9° I
Analog wird hergestellt:
[4-(trans-4-Pentylcyclohexyl)-phenyl)-2,3-difluor-4-octyloxybenzoat, K 58° $S_c$ 96° N 160,8° I

Beispiel 11:

Durch Umsetzung von o-Difluorbenzol mit Butyllithium in Gegenwart von Kaliumtertiärbutylat bei -90 bis -100° in Tetrahydrofuran, Alkylierung der gebildeten Kaliumverbindung mit Pentylbromid/1,3-Dimethyltetrahydro-2-(1H)-pyrimidinon (DMPU), Isolierung des 2,3-Difluorpentylbenzols, erneute Metallierung mittels Butyllithium und anschließende Reaktion mit festem Kohlendioxid erhält man 2,3-Difluor-4-pentylbenzoesäure.

Veresterung dieser Säure mit 4-Hexyloxyphenol nach dem vorher beschriebenen Verfahren ergibt (4-Hexyloxyphenyl)-2,3-difluor-4-pentylbenzoat.

Beispiel 12:

Analog erhält man [4-(2,3-Difluor-4'-propylbiphenylyl)]-2,3-difluor-4-pentylbenzoat. Das dafür erforderliche 4-Hydroxy-2,3-difluor-4'-propylbiphenyl wird wie folgt hergestellt:
Durch Lithierung von o-Difluorbenzol bei -70° bis -80°, Umsetzung mit 4-Propylcyclohexanon, Dehydratisierung des tert. Alkohols und anschließende Aromatisierung des Cyclohexenringes erhält man 2,3-Difluor-4'-propylbiphenyl. Erneute Metallierung und Umsetzung mit N-Formylpiperidin ergibt den 2,3-Difluor-4'-propylbiphenyl-4-carbaldehyd. Der Aldehyd wird mit 3-Chlorperbenzoesäure in Methylenchlorid nach Baeyer-Villinger zum Formiat oxidiert das anschließend alkalisch zum gewünschten Phenol verseift wird.

Die folgenden Beispiele betreffen erfindungsgemäß flüssigkristalline Phasen:

Beispiel A

Eine flüssigkristalline Phase bestehend aus

| | |
|---|---|
| 3 % | 2-p-Heptyloxyphenyl-5-heptylpyrimidin, |
| 5 % | 2-p-Nonyloxyphenyl-5-heptylpyrimidin, |
| 7 % | 2-p-Hexyloxyphenyl-5-nonylpyrimidin, |
| 22 % | 2-p-Nonyloxyphenyl-5-nonylpyrimidin, |
| 5 % | 2-(5-Octylpyridyl)-2,3-difluor-4-heptyloxybenzoat, |
| 9 % | [4-(5-Octylpyridin-2-yl)-phenyl]-2,3-difluor-4-octyloxybenzoat, |
| 7 % | r-1-Cyan-cis-4-(4'-heptylbiphenyl-4-yl)-1-hexylcyclohexan, |
| 12 % | r-1-Cyan-cis-4-(4'-octylbiphenyl-4-yl)-1-butylcyclohexan, |
| 20 % | r-1-Cyan-cis-4-(4'-nonyloxybiphenyl-4-yl)-1-octylcyclohexan und |
| 10 % | optisch aktivem 2-Cyan-2-methylhexansäure-[p-(5-nonylpyrimidin-2-yl)-phenyl]-ester |

zeigt $S_c^*$ 64 $S_A$ 76 Ch 85 I und eine Spontanpolarisation von 21 nC/cm$^2$ bei Raumtemperatur.

Beispiel B

Eine flüssigkristalline Phase bestehend aus

| | |
|---|---|
| 6 % | 2-p-Octyloxyphenyl-5-octylpyrimidin, |
| 8 % | 2-p-Nonyloxyphenyl-5-octylpyrimidin, |
| 6 % | 2-p-Octyloxyphenyl-5-nonylpyrimidin, |
| 24 % | 2-p-Nonyloxyphenyl-5-nonylpyrimidin, |
| 7 % | 2-(5-Nonylpyrimidyl)-2,3-difluor-4-nonyloxybenzoat, |
| 5 % | [4-(5-Heptylpyrimidin-2-yl)-phenyl]-2,3-difluor-4-octyloxybenzoat, |
| 8 % | 2-(p-Heptyloxyphenyl)-5-(p-pentylphenyl)-1,3,4-thiadiazol, |
| 9 % | 2-(p-Octyloxyphenyl)-5-(p-heptylphenyl)-1,3,4-thiadiazol, |
| 15 % | r-1-Cyan-cis-4-(4'-octyloxybiphenyl-4-yl)-1-hexylcyclohexan und |
| 12 % | optisch aktivem 2-Chlor-3-methylbuttersäure-[p-(5-octylpyrimidin-2-yl)-phenyl]-ester |

zeigt $S_c^*$ 63 $S_A$ 67 Ch 72 I und eine Spontanpolarisation von 15 $nC/cm^2$ bei Raumtemperatur.

Beispiel C

Man stellt eine nematische Flüssigkristallphase her bestehend aus

| | |
|---|---|
| 4 % | p-trans-4-Heptylcyclohexyl-benzonitril, |
| 5 % | 2-p-Cyanphenyl-5-butyl-1,3-dioxan, |
| 4 % | 2-p-Cyanphenyl-5-pentyl-1,3-dioxan, |
| 8 % | p-Ethylbenzoesäure-(p-cyanphenylester), |
| 6 % | p-Propylbenzoesäure-(p-cyanphenylester), |
| 8 % | p-trans-4-Propylcyclohexylbenzoesäure-(p-propylphenylester), |
| 8 % | p-trans-4-Propylcyclohexylbenzoesäure-(p-pentylphenylester), |
| 8 % | p-trans-4-Pentylcyclohexylbenzoesäure-(p-propylphenylester), |
| 6 % | trans-4-Propylcyclohexancarbonsäure-(p-methoxyphenylester), |
| 6 % | trans-4-Propylcyclohexancarbonsäure-(p-ethoxyphenylester), |
| 10 % | trans-1-p-Propylphenyl-4-pentylcyclohexan, |
| 4 % | p-(p-Hexyloxybenzoyloxy)-benzoesäure-(p-butylphenylester), |
| 7 % | p-Hexyloxybenzoesäure-(p-pentylphenylester) und |
| 16 % | 5-(2-Pentylpyridyl)-2,3-difluor-4-ethoxybenzoat. |

Beispiel D

Man stellt eine nematische Mischung her bestehend aus

| | |
|---|---|
| 7 % | 2-p-Cyanphenyl-5-propyl-1,3-dioxan, |
| 7 % | 2-p-Cyanphenyl-5-butyl-1,3-dioxan, |
| 6 % | 2-p-Cyanphenyl-5-pentyl-1,3-dioxan, |
| 10 % | trans-1-p-Propylphenyl-4-pentylcyclohexan, |
| 8 % | 4-Cyan-4'-(trans-4-pentylcyclohexyl)-biphenyl, |
| 6 % | 4-Ethyl-4'-(trans-4-pentylcyclohexyl)-biphenyl, |
| 4 % | 4-Ethyl-4'-(trans-5-propylcyclohexyl)-biphenyl, |
| 5 % | 2-p-Pentyloxyphenyl-5-hexylpyrimidin, |
| 6 % | 2-p-Heptyloxyphenyl-5-hexylpyrimidin, |
| 5 % | 2-p-Methoxyphenyl-5-heptylpyrimidin, |
| 8 % | 2-p-Heptyloxyphenyl-5-heptylpyrimidin, |
| 8 % | 2-p-Nonyloxyphenyl-5-heptylpyrimidin, |
| 7 % | trans-4-Propylcyclohexyl-2,3-difluor-4-ethoxybenzoat, |
| 5 % | [trans-4-(trans-4-Propylcyclohexyl)-cyclohexyl]-2,3-difluor-4-propylbenzoat, |
| 4 % | trans-4-Propylcyclohexancarbonsäure-(p-methoxyphenylester) und |
| 4 % | Buttersäure-(p-trans-4-propylcyclohexylphenylester). |

Beispiel E

Man stellt eine nematische Mischung her bestehend aus

| | |
|---|---|
| 15 % | p-trans-4-Propylcyclohexyl-benzonitril, |
| 27 % | trans-1-p-Ethylphenyl-4-propylcyclohexan, |
| 10 % | trans-1-p-Ethoxyphenyl-4-propylcyclohexan, |
| 7 % | 4-Cyan-4'-(trans-4-pentylcyclohexyl)-biphenyl, |
| 8 % | 4-Ethyl-4'-(trans-4-pentylcyclohexyl)-biphenyl, |
| 9 % | 4-Ethyl-4'-(trans-4-propylcyclohexyl)-biphenyl, |
| 10 % | 4-(trans-4-Pentylcyclohexyl)-4'-(trans-4-propylcyclohexyl)-biphenyl und |
| 19 % | trans-4-Propylcyclohexyl-2,3-difluor-4-ethoxybenzoat. |

Beispiel F

Eine flüssigkristalline Phase bestehend aus

| | |
|---|---|
| 11 % | 4-Octyloxyphenyl-4-decyloxybenzoat, |
| 13 % | 4-Decyloxyphenyl-4-decyloxybenzoat, |
| 8 % | 4-Nonylphenyl-2,3-difluor-4-nonyloxybenzoat, |
| 12 % | 4-Heptylphenyl-p-(4-octyloxyphenyl)-benzoat, |
| 14 % | 4'-Octyloxybiphenyl-4-yl-4-heptyloxybenzoat, |
| 7 % | 4'-Octylbiphenyl-4-yl-2,3-difluor-4-nonyloxybenzoat, |
| 5 % | 4'-Octyloxy-2,3-difluorbiphenyl-4-yl-2,3-difluor-4-pentylbenzoat, |
| 5 % | 4'-Octyloxy-2',3'-difluorbiphenyl-4-yl-4-nonyloxybenzoat, |
| 11 % | 4'-Nonyloxybiphenyl-4-yl-4-heptyloxybenzoat und |
| 14 % | optisch aktivem 2-Chlor-3-methylbuttersäure-[p-(5-heptylpyrimidin-2-yl)-phenyl]-ester |

zeigt $S_c^*$ 58 $S_A$ 66 Ch 78 I und eine Spontanpolarisation von 18 nC/cm$^2$ bei Raumtemperatur.

**Patentansprüche**

**1.** Derivate der 2,3-Difluorbenzoesäure der Formel I,

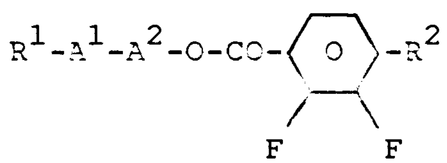

I

worin

$R^1$ und $R^2$ jeweils unabhängig voneinander eine Alkylgruppe mit 1 bis 15 C-Atomen, worin auch eine oder zwei nicht benachbarte $CH_2$-Gruppen durch -O-, -CO-, -CH=CH- und/oder -C≡C- ersetzt sein können, und

$A^1$ und $A^2$ jeweils unabhängig voneinander unsubstituiertes oder durch ein oder zwei Fluor substituiertes 1,4-Phenylen, worin auch eine oder zwei CH-Gruppen durch N ersetzt sein können, trans-1,4-Cyclohexylen, oder eine der beiden Gruppen $A^1$ und $A^2$ auch eine Einfachbindung

bedeuten.

**2.** Derivate nach Anspruch 1, dadurch gekennzeichnet, daß mindestens eine der Gruppen $A^1$ und $A^2$ eine 1,4-Phenylengruppe bedeutet, worin eine oder zwei CH-Gruppen durch N ersetzt sind.

**3.** Derivate nach Anspruch 1, dadurch gekennzeichnet, daß -$A^1$-$A^2$-

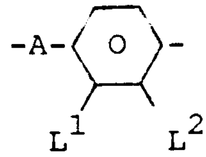

bedeutet,
worin

A unsubstituiertes oder durch ein oder zwei Fluor substituiertes 1,4-Phenylen, trans-1,4-Cyclohexylen oder eine Einfachbindung, und

$L^1$ und $L^2$ jeweils unabhängig voneinander H oder F bedeuten.

4. Derivate nach Anspruch 1, dadurch gekennzeichnet, daß $-A^1-A^2-$

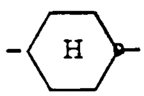 oder 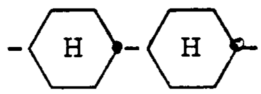

bedeutet.

5. Verfahren zur Herstellung von Derivaten der 2,3-Difluorbenzoesäure nach mindestens einem der Ansprüche 1,2, 3 oder 4, dadurch gekennzeichnet, daß man eine Hydroxyverbindung der Formel

$R^1-A^1-A^2-OH$

oder eines ihrer reaktionsfähigen Derivate mit einer 2,3-Difluorbenzoesäure der Formel

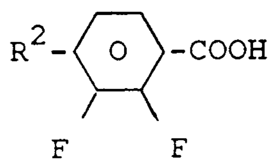

oder einem ihrer reaktionsfähigen Derivate verestert.

6. Verwendung der Derivate nach mindestens einem der Ansprüche 1, 2, 3 oder 4 als Komponenten flüssigkristalliner Phasen.

7. Flüssigkristalline Phase mit mindestens zwei flüssigkristallinen Komponenten, dadurch gekennzeichnet, daß mindestens eine Komponente ein Derivat nach mindestens einem der Ansprüche 1, 2, 3 oder 4 ist.

8. Elektrooptisches Anzeigeelement, dadurch gekennzeichnet, daß es als Dielektrikum eine Phase nach Anspruch 7 enthält.

## Claims

1. Derivatives of 2,3-difluorobenzoic acid of the formula I,

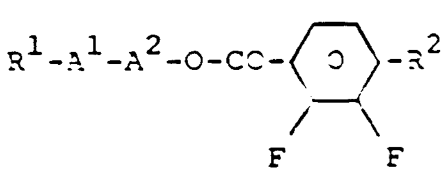 I

in which

$R^1$ and $R^2$, independently of one another, are each an alkyl group having 1 to 15 C atoms, in which, in addition, one or two non-adjacent $CH_2$ groups may be replaced by -O-, -CO-, -CH=CH- and/or -C≡C-, and

$A^1$ and $A^2$, independently of one another, are each 1,4-phenylene which is unsubstituted or substituted by one or two fluorine atoms, and in which, in addition, one or two CH groups may be replaced by N, or are trans-1,4-cyclohexylene, or one of the two $A^1$ and $A^2$ groups is alternatively a single bond.

**2.** Derivatives according to Claim 1, characterized in that at least one of the groups $A^1$ and $A^2$ is a 1,4-phenylene group in which one or two CH groups are replaced by N.

**3.** Derivatives according to Claim 1, characterized in that $-A^1-A^2-$ is

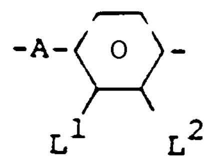

in which

A is 1,4-phenylene which is unsubstituted or substituted by one or two fluorine atoms, or is trans-1,4-cyclohexylene or a single bond, and

$L^1$ and $L^2$, independently of one another, are each H or F.

**4.** Derivatives according to Claim 1, characterized in that $-A^1-A^2-$ is

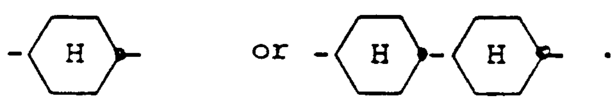

**5.** Process for the preparation of derivatives of 2,3-difluorobenzoic acid according to at least one of Claims 1, 2, 3 or 4, characterized in that a hydroxyl compound of the formula

$R^1-A^1-A^2-OH$

or one of its reactive derivatives is esterified using a 2,3-difluorobenzoic acid of the formula

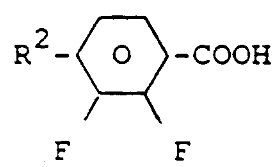

or one of its reactive derivatives.

**6.** Use of the derivatives according to at least one of Claims 1, 2, 3 or 4 as components of liquid-crystalline phases.

**7.** Liquid-crystalline phase having at least two liquid-crystalline components, characterized in that at least one component is a derivative according to at least one of Claims 1, 2, 3 or 4.

**8.** Electrooptical display element, characterized in that it contains, as dielectric, a phase according to Claim 7.

## Revendications

**1.** Dérivés de l'acide 2,3-difluorobenzoïque de formule I,

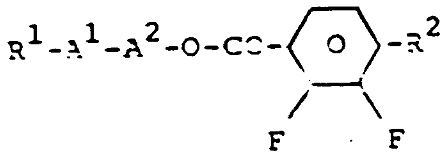

I

dans laquelle

$R^1$ et $R^2$ représentent chacun, indépendamment l'un de l'autre, un groupe alkyle ayant de 1 à 15 atomes de carbone, dans lequel un ou deux groupes $CH_2$ non voisins peuvent également être remplacés par -O-, -CO-, -CH = CH- et/ou -C≡C-, et

$A^1$ et $A^2$ représentent chacun, indépendamment l'un de l'autre, un radical 1,4-phénylène, non substitué ou substitué par un ou deux atomes de fluor, dans lequel un ou deux groupes CH peuvent être remplacés par N, un radical trans-1,4-cyclohexylène, ou l'un des deux groupes $A^1$ et $A^2$ représente également une simple liaison.

**2.** Dérivés selon la revendication 1, caractérisés en ce qu'au moins un des groupes $A^1$ et $A^2$ représente un radical 1,4-phénylène dans lequel un ou deux groupes CH est(sont) remplacé(s) par N.

**3.** Dérivés selon la revendication 1, caractérisés en ce que $-A^1-A^2-$ représente un groupe

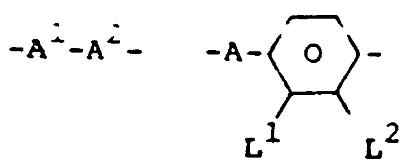

dans lequel

A représente un radical 1,4-phénylène non substitué ou substitué par un ou deux atomes de fluor, un radical trans-1,4-cyclohexylène ou une simple liaison, et

$L^1$ et $L^2$ représentent chacun, indépendamment l'un de l'autre, H ou F.

**4.** Dérivés selon la revendication 1, caractérisés en ce que $-A^1-A^2-$ représente un groupe

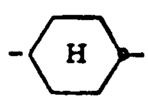 ou 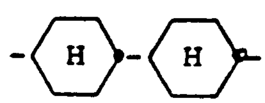

**5.** Procédé pour la préparation de dérivés de l'acide 2,3-difluorobenzoïque selon au moins l'une des revendications 1, 2, 3 ou 4, caractérisé en ce que l'on estérifie un composé hydroxylé de formule

$R^1-A^1-A^2-OH$

ou un de ses dérivés réactifs, avec un acide 2,3-difluorobenzoïque de formule

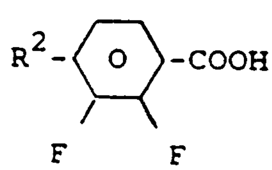

ou un de ses dérivés réactifs.

6. Utilisation des dérivés selon au moins l'une des revendications 1, 2, 3 ou 4, en tant que composants de phases de cristaux liquides.

7. Phase de cristaux liquides comportant au moins deux composants cristallins liquides, caractérisée en ce qu'au moins un composant est un dérivé selon au moins l'une des revendications 1, 2, 3 ou 4.

8. Elément d'affichage électro-optique, caractérisé en ce qu'il contient, en tant que diélectrique, une phase selon la revendication 7.